# EUROPÄISCHE PATENTSCHRIFT

(11) **EP 3 206 252 B1**
(45) Veröffentlichungstag und Bekanntmachung des Hinweises auf die Patenterteilung: **07.06.2023**
(21) Anmeldenummer: 17000083.0
(22) Anmeldetag: 18.01.2017
(51) Int. Cl.: H01Q 1/50, H02G 13/00, H01Q 1/12, F16M 11/00, F16M 13/02, F16M 11/10

(54) **HALTEVORRICHTUNG FÜR EINE BLITZSCHUTZFANGEINRICHTUNG**
HOLDING DEVICE FOR A LIGHTNING PROTECTION DEVICE
DISPOSITIF DE RETENUE POUR UN DISPOSITIF DE SÉCURITÉ PARAFOUDRE

(30) Priorität: 09.02.2016 DE 202016000781 U
(43) Veröffentlichungstag der Anmeldung: 16.08.2017
(73) Patentinhaber: Ott, Karl-Heinz, 36208 Wildeck (DE)
(72) Erfinder: Ott, Karl-Heinz, 36208 Wildeck (DE)
(74) Vertreter: Lindinger, Bernhard

(56) Entgegenhaltungen:
- DE-A1- 10 258 148
- DE-U1-202004 006 626
- KR-A- 20100 071 729

## Beschreibung

### Gebiet der Technik

Die Erfindung betrifft eine Haltevorrichtung mit einer Montagebasis und einem darauf mit Haltemitteln gehaltenen rohr- oder stangenförmigen Stativ für eine Blitzschutzfangeinrichtung, wobei die Montagebasis Mittel zur Veränderung ihrer Längsausdehnung umfasst. Solche Haltevorrichtungen sind für die Halterung vom oberen Bereich einer Blitzschutzfangeinrichtung auf insbesondere Gebäudedächern vorgesehen. Die Blitzschutzfangeinrichtung umfasst dabei eine von ihrer Spitze aus vom Gebäudedache herunterführende Leitung zum Ableiten eines eventuell einschlagenden Blitzes.

### Stand der Technik

Als Haltevorrichtung mit einer Montagebasis und einem darauf mit Haltemitteln gehaltenen rohr- oder stangenförmigen Stativ für eine Blitzschutzfangeinrichtung, wobei die Montagebasis Mittel zur Veränderung ihrer Längsausdehnung umfasst, sind solche bekannt, bei denen die Montagebasis derart ausgebildet ist, dass sie für die Gebäudedachmontage mit Befestigungsmittel an zwei benachbarten Dachsparren oder Dachlatten befestigt werden muss. Eine solche Halteeinrichtung ist von dem Unternehmen DEHN + SÖHNE GmbH + Co.KG ansässig Rennweg 15, D-90489 Nürnberg im Internet unter der Adresse "https://www.dehn.de/de/2845/11272/Familie-html/11272/Dachsparrenhalter.html?pid=1039601&sid=103960" sowie "https://www.dehn.de/de/2845/11272/Familiehtml/11272/Dachsparrenhalter.html" dort als Dachsparrenhalter vom Typ DASH D48 AS600.750 STTZN mit der Artikelnummer 105 240 offenbart. Diese Haltevorrichtung hat jedoch den Nachteil, dass die Befestigung unter der Dacheindeckung erfolgt, also dafür die Dacheindeckung an der Stelle entfernt oder sogar aufgeschnitten wird und nach der Befestigung an der Stelle das Dach daran angepasst abgedichtet beziehungsweise eingedeckt wird. Ferner sind häufig bei bekannten Haltevorrichtungen, wie beispielsweise bei dem in DE 102 58 148 A1 offenbarten Antennenhalter, die rohr- oder stangenförmigen Stative nicht für jeden Winkel der Dachneigung in einem Winkelbereich genau vertikal nach oben zeigend festlegbar. Dieses hat den Nachteil, dass der am Stativ gehaltene obere Bereich der Blitzschutzfangeinrichtung nicht optimal für seine Funktion ausgerichtet ist. Bei dem in DE 102 58 148 A1 offenbarten Antennenhalter weist zwar die Montagebasis Mittel zur Veränderung ihrer Längsausdehnung auf, aber die Winkelstellung des Stativs in seiner Längsachse relativ zur Montagebasis ist nachteilig nur stufenweise durch vorgegebene Bohrungen in einer zum Halten des Stativs in einer Winkelstellung vorgesehenen Lasche verstellbar. Des Weiteren besteht aufgrund von einer maximalen Querausdehnung der Montagebasis unter dreißig Zentimetern bei bekannten auf Gebäudedächern befestigten Haltevorrichtungen mit Stativ für eine Blitzschutzfangeinrichtung bei starkem Sturm die Gefahr von Stabilitätsproblemen der Haltevorrichtung.

In KR 2010 0071729 A ist eine Haltevorrichtung für ein Solarzellenmodul offenbart, die ein als Montagebasis fungierendes erstes Stützelement zur Befestigung auf der Oberfläche eines Bodens aufweist. Ein zweites Stützelement der dortigen Haltevorrichtung, das das Solarzellenmodul trägt, ist mit einer Gelenkkombinationseinheit mit dem ersten Stützelement verbunden. Zwar ist bei der in KR 2010 0071729 A offenbarten Haltevorrichtung das Solarzellenmodul in seiner Winkelstellung relativ zum als Montagebasis fungierenden ersten Stützelement stufenlos verstellbar, aber das als Montagebasis fungierende ersten Stützelement weist bereits nachteilig keine Mittel zur Veränderung seiner Längsausdehnung auf. In DE 20 2004 006626 U1 ist ein Masthalter zur Befestigung an einer Tragkonstruktion, wie beispielsweise an den Dachsparren eines Gebäudedachs, offenbart. Der dortige Masthalter weist eine Montagebasis und ein darauf mit Haltemitteln gehaltenes rohrförmiges Stativ für eine Antenne auf, wobei die Montagebasis Mittel zur Veränderung ihrer Längsausdehnung umfasst, sowie eine stufenlose Verstellmöglichkeit der feststellbaren Winkelstellung des Stativs in seiner Längsachse relativ zur Montagebasis offenbart wird. Jedoch ist auch der in DE 20 2004 006626 U1 beschriebene Masthalter dafür vorgesehen, ihn nachteilig unter der Dacheindeckung direkt an der Tragkonstruktion wie den Dachbalken zu befestigen. Die Querausdehnung der Montagebasis ist somit nachteilig bereits durch den Abstand von gegebenenfalls Dachlatten der Tragkonstruktion eines Gebäudedachs beschränkt, so dass dadurch insbesondere bei Sturm Stabilitätsprobleme auftreten können.

Der Erfindung liegt daher die Aufgabe zugrunde, eine verbesserte Haltevorrichtung mit einer Montagebasis und einem darauf mit Haltemitteln gehaltenen rohr- oder stangenförmigen Stativ für eine Blitzschutzfangeinrichtung, wobei die Montagebasis Mittel zur Veränderung ihrer Längsausdehnung umfasst, bereitzustellen.

### Zusammenfassung der Erfindung

Die Aufgabe wird durch eine Haltevorrichtung gemäß den Merkmalen des Schutzanspruchs 1 gelöst.

Durch eine Haltevorrichtung mit einer Montagebasis und einem darauf mit Haltemitteln gehaltenen rohr- oder stangenförmigen Stativ für eine Blitzschutzfangeinrichtung, wobei die Montagebasis Mittel zur Veränderung ihrer Längsausdehnung umfasst, und wobei die Haltemittel derart ausgebildet sind, dass das rohr- oder stangenförmige Stativ stufenlos über einen Winkelbereich in einer Winkelstellung von seiner Längsachse relativ zur Montagebasis festlegbar ist, und die Montagebasis derart ausgebildet ist, dass sie von außen auf der Dacheindeckung eines Gebäudedachs mittels Befestigungsmittel befestigbar ist, und die Montagebasis in ihrer Querausdehnung senkrecht zu Längsausdehnung im Maximum mindestens dreißig Zentimeter aufweist und die Montagebasis in der Ebene ihrer Quer- und Längsausdehnung vier mindestens dreißig Zentimeter voneinander entfernte äußere Ecken aufweist, und im Bereich der vier äußeren Ecken jeweils äußere Positionen für Befestigungsmittel zur Befestigung der Haltevorrichtung von außen auf der Dacheindeckung eines Gebäudedachs liegen und die Mittel zur Veränderung der Längsausdehnung der Montagebasis zwei zueinander parallel liegende teleskopartige Elemente umfassen, die jeweils zwei ineinandergreifende Rohre oder jeweils ein Rohr und eine in das Rohr eingreifende Stange enthalten, wird die Aufgabe gelöst. Die erfindungsgemäße Haltevorrichtung hat die Vorteile, dass sie von außen ohne die Dacheindeckung dort zu entfernen auf die Dacheindeckung montiert wird und ihr Stativ für die Blitzschutzfangeinrichtung genau vertikal für einen Winkelbereich von verschieden Dachneigungen nach oben festlegbar ist. Ferner trägt die maximale Querausdehnung der Montagebasis von mindestens dreißig Zentimetern zur hohen Stabilität der Haltevorrichtung im Falle ihrer Befestigung auf einem Gebäudedach bei. Außerdem wird durch die Mindestentfernung der äußeren Positionen der Befestigungsmittel im Fall der Befestigung der Haltevorrichtung auf einem Gebäudedach auch bei Sturm eine hohe Stabilität der Befestigung für alle Windrichtungen ermöglicht. Die Montagebasis ist einfach und effektiv und ausreichend stabil in ihrer Längsausdehnung veränderbar.

In den Unteransprüchen sind vorteilhafte Ausgestaltungen, Weiterbildungen und Verbesserungen des jeweiligen Gegenstandes der Erfindung angegeben.

Gemäß einer vorteilhaften Ausgestaltung der erfindungsgemäßen Haltevorrichtung weist die Montagebasis an den beiden Endbereichen ihrer Längsausdehnung jeweils untere Auflageflächen zur Befestigung der Haltevorrichtung von außen auf der Dacheindeckung eines Gebäudedachs mittels Befestigungsmittel auf. Durch diese unteren Auflageflächen an den Endbereichen der Längenausdehnung der Montagebasis wird eine hohe Stabilität in Längsrichtung der Montagebasis bei auf einem Gebäudedach befestigter Haltevorrichtung erreicht.

Gemäß einer vorteilhaften Weiterbildung sind die unteren Auflageflächen jeweils derart ausgebildet, dass sie an die Form der Dacheindeckung an den jeweils vorgesehenen Auflagerstellen angepasst sind. Damit wird die Güte und Stabilität der Befestigung der Haltevorrichtung auf der jeweiligen Form der Dacheindeckung verbessert.

Nach einer vorteilhaften Ausgestaltung der erfindungsgemäßen Haltevorrichtung sind die unteren Auflageflächen plan ausgebildet, wobei die jeweilige plane Auflagefläche parallel zur von der Montagebasis aufgespannten Ebene liegt und von Seiten des Stativs gesehen die Montagebasis nach unten hin begrenzen. Dadurch kann die Montagebasis gut auf viele Arten von Dacheindeckungen, insbesondere die, bei denen die Auflagestellen plan in einer Ebene liegen, mit den Auflageflächen aufliegen und befestigt werden. Die Stabilität der Befestigung wird dadurch gefördert.

Gemäß einer vorteilhaften Ausgestaltung der Haltevorrichtung weist die Montagebasis Löcher für Befestigungsmittel, wie insbesondere Schrauben, zur Befestigung der Haltevorrichtung von außen auf der Dacheindeckung eines Gebäudedachs auf.

Vorzugsweise ist die Montagebasis für Befestigungsmittel als Schrauben in Form von Stockschrauben geeignet zur Verschraubung durch eine Wellfaserzementplatte als Dacheindeckung eines Gebäudedachs ausgebildet. Dadurch kann die Haltevorrichtung einfach aber stabil von außen auf einer Wellfaserzementplatte eines Gebäudedachs befestigt werden.

Gemäß einer vorteilhaften Variante der Haltevorrichtung weist sie in den Bereichen unter den beiden Querseiten der Montagebasis befestigte Winkelstücke auf, deren Unterseiten zum Aufliegen und Befestigen, wie insbesondere durch Vernietung, auf einem Trapezdach als Dacheindeckung eines Gebäudedachs ausgeformt sind. Damit kann die Haltevorrichtung einfach aber stabil von außen auf einem Trapezdach als Dacheindeckung eines Gebäudedachs befestigt werden.

Nach einer weiteren vorteilhaften Variante der Haltevorrichtung weist die Montagebasis Befestigungsmittel ausgebildet zum Festklemmen am Stehfalz eines Stehfalzdaches für die Befestigung auf einem Stehfalzdach als Dacheindeckung eines Gebäudedachs auf. Solche Befestigungsmittel, mit dem die Haltevorrichtung am Stehfalz festgeklemmt wird, sind sicher und einfach zu handhaben.

Eine besonders stabile und witterungsbeständige und damit vorteilhafte Ausgestaltung der Haltevorrichtung ist eine bestehend aus Edelstahl, wie beispielsweise aus V4A Edelstahl.

Gemäß einer vorteilhaften Ausgestaltung der erfindungsgemäßen Haltevorrichtung ist die festlegbare Winkelstellung der Längsachse des rohr- oder stangenförmigen Stativs zur Montagebasis im Bereich von 20 bis 90 Grad stufenlos einstellbar. Dieses erlaubt eine Montage der Haltevorrichtung für einen großen Bereich von Dachneigungen. So ist damit eine Befestigung sowohl auf Flachdächern als auch auf schrägen Dachflächen bis zu einer Dachneigung von 70 Grad zur Grundfläche möglich.

Vorzugsweise wird die Winkelstellung mittels eines an seinem einen Ende vom Stativboden gesehen in Querausdehnung gegenüberliegenden Bereich der Montagebasis schwenkbar gelagerten als Bügel ausgeformten Haltemittels und eines, an dessen anderen Ende befestigten, den Stativquerschnitt umschießend fixierbaren als Schelle ausgeformten Haltemittels ermöglicht. Eine solche Ausgestaltung der Haltevorrichtung ermöglicht einfach und effektiv das rohr- oder stangenförmige Stativ stufenlos über einen Winkelbereich in einer Winkelstellung von seiner Längsachse relativ zur Montagebasis festzulegen.

Schließlich können die Merkmale der Unteransprüche für das erfindungsgemäße Haltevorrichtung im Wesentlichen frei miteinander und nicht durch die in den Ansprüchen vorliegende Reihenfolge festgelegt kombiniert werden, sofern sie unabhängig voneinander sind.

### Kurze Beschreibung der Zeichnungen

Anhand der Zeichnungen werden Ausführungsbeispiele der Erfindung erläutert.

Es zeigen
Figur 1 ein Ausführungsbeispiel der erfindungsgemäßen Haltevorrichtung in Seitenansicht,
Figur 2 das gleiche Ausführungsbeispiel der erfindungsgemäßen Haltevorrichtung wie in Figur 1 in Ansicht von oben,
Figur 3 ein weiteres Ausführungsbeispiel der erfindungsgemäßen Haltevorrichtung in Vorderansicht,
Figur 4 ein weiteres Ausführungsbeispiel der erfindungsgemäßen Haltevorrichtung in Vorderansicht, und
Figur 5 ein weiteres Ausführungsbeispiel der erfindungsgemäßen Haltevorrichtung in Vorderansicht.

### Ausführliche Beschreibung der Erfindung

Alle Zeichnungen sind schematisch zu verstehen. Auf maßstabsgetreue Abbildungen wurde zum Zwecke erhöhter Klarheit der Darstellung verzichtet.

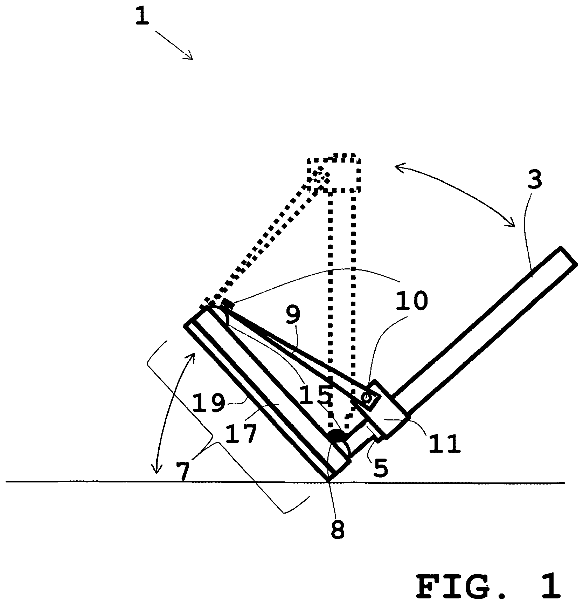

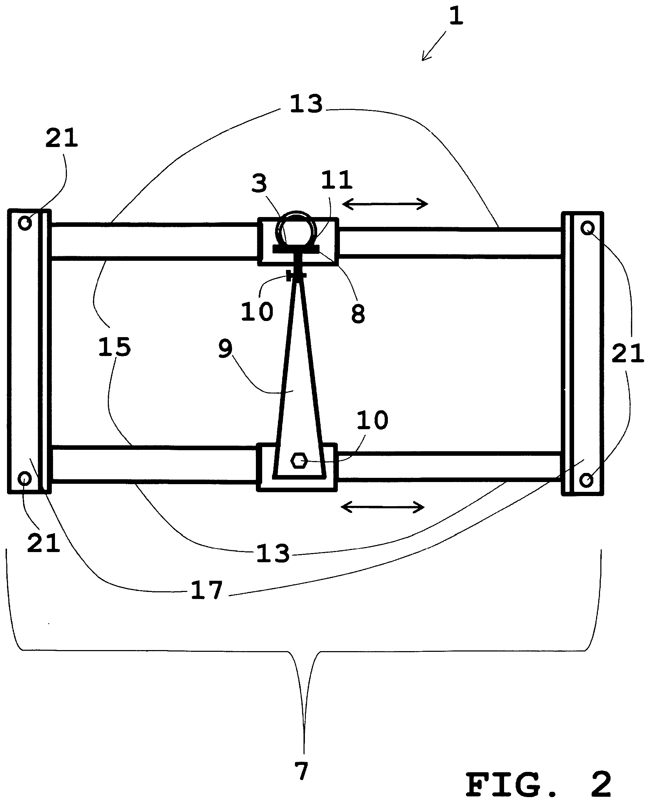

In Figur 1 und Figur.2 ist ein Ausführungsbeispiel der erfindungsgemäßen Haltevorrichtung (1) in Seitenansicht und in Ansicht von oben dargestellt. Dabei ist ein rohrförmiges Stativ (3) stufenlos schwenkbar mit seinem unteren Ende durch ein als Scharnier ausgebildetes Haltemittel (8) an der einen Längsseite der Montagebasis (7) gehalten. Es ist dort auch ein anderes geeignetes Haltemittel wie beispielsweise ein biegbares angeschraubtes Metallstück denkbar. Das Stativ (3) enthält im unteren Bereich eine seitliche Ausnehmung (5). Diese Ausnehmung (5) ist dazu geeignet, durch sie eine Leitung einer Blitzschutzfangeinrichtung in das rohrförmige Stativ (3) zu führen, so dass der obere Bereich dieser Leitung im Stativ (3) gehalten wird. Es ist auch ein stangenförmiges Stativ (3), an dem eine solche Leitung einer Blitzschutzfangeinrichtung befestig werden kann, denkbar. An vom Stativboden aus gesehenen in Querausdehnung der Montagebasis (7) gegenüberliegenden Längsseite ist ein Bügel als ein weiteres Haltemittel (9) mit seinem einen Ende schwenkbar befestigt. Die Befestigung umfasst mit zu den Haltemitteln gehörend eine ausreichend stabile Schraube, also ein als Schraube ausgeformtes Haltemittel (10), mit zum Beispiel der Größe M10, mit der das als Bügel ausgeformte Haltemittel (9) in gewünschter Schwenkstellung festgestellt werden kann. Es sind aber dort auch andere Befestigungen wie beispielsweise ein Scharnier denkbar. An dem anderen Ende des als Bügel ausgeformten Haltemittels (9) ist eine Schelle, also als Schelle ausgeformtes weiteres Haltemittel (11), befestigt. Dieses als Schelle ausgeformte Haltemittel (11) umschließt den Stativquerschnitt des Stativs (3). Das als Schelle ausgeformte Haltemittel (11) kann in einem Längenbereich des Stativs (3) frei wählbar zum Beispiel mittels einer Schraube, also als Schraube ausgeformtes Haltemittel (10), festgestellt werden. So beispielsweise in der Nähe des Stativbodens für einen großen Winkel zwischen Längsachse des Stativs (3) und der Montagebasis (7) oder in der Nähe der Spitze des Stativs (3) für einen spitzen Winkel zwischen Längsachse des Stativs (3) und der Montagebasis (7). Je nach gewünschter Ausrichtung des Stativs (3) ist die Winkelstellung der Längsachse des Stativs (3) relativ zur Montagebasis (7) festlegbar. Der Winkelbereich reicht stufenlos von zwanzig Grad bis neunzig Grad. Die Montagebasis (7) verfügt als Mittel zur Veränderung ihrer Längsausdehnung über zwei zueinander parallel liegende teleskopartige Elemente (13), die jeweils zwei ineinandergreifende Rohre (15) enthalten. Denkbar sind dabei auch jeweils ein Rohr (15) und eine in das Rohr (15) eingreifende Stange. Es sind auch andere bekannte geeigneten Mittel zur Veränderung der Längsausdehnung denkbar, wie beispielweise zwei mit einer Klammer zusammengehaltene parallel zueinander verschiebbare Stangen. Die Längsausdehnung der Montagebasis (7) ist ohne darauf beschränkt zu sein im Bereich von fünfzig bis fünfundachtzig Zentimeter variierbar. Das Stativ (3) ist unten an einem teleskopartigen Element (13), in dessen mittleren Bereich, auf der einen Längsseite der Montagebasis (7) schwenkbar in Richtung der zur Längsausdehnung senkrechten Querausdehnung der Montagebasis (7) befestigt. An der in Querausdehnung gegenüberliegenden Längsseite der Montagebasis (7) verläuft das zweite teleskopartige Element (13), in dessen mittleren Bereich das eine Ende des als Bügel ausgeformten Haltemittels (9), schwenkbar befestigt ist. Die Querausdehnung der Montagebasis (7) beträgt in ihrem Maximum dreißig Zentimeter, wobei auch Varianten mit größeren Querausdehnungen denkbar sind. Die Montagebasis (7) weist an den beiden Endbereichen ihrer Längsausdehnung jeweils ein in Querrichtung verlaufendes in sich abgewinkeltes Abschlussstück (17) auf. Beide Abschlussstücke (17) haben an ihrer Unterseite eine zur Auflage auf einer Dacheindeckung eines Gebäudedachs geeignete plane untere Auflagefläche (19), die parallel zur von der Montagebasis (7) aufgespannten Ebene liegen und von Seiten des Stativs (3) gesehen die Montagebasis (7) nach unten hin begrenzen. Damit ist die Haltevorrichtung (1) geeignet, beispielsweise von außen auf einem Trapezdach oder einer Zinkblecheindeckung eines Gebäudedachs mit den planen unteren Auflageflächen (19) aufzuliegen. Für zum Beispiels eine Wellfaserzementeindeckung in Wellenform ist auch eine Ausführungsvariante der Haltevorrichtung (1) mit an die Wellenform der jeweils vorgesehenen Auflagerstelle angepassten unteren Auflageflächen (19) denkbar. Im Bereich der vier äußeren Ecken der Montagebasis (7) sind in den beiden Anschlussstücken (17) Löcher (21) für Befestigungsmittel wie beispielsweise durch die Löcher (21) passende Schauben zur Befestigung der Haltevorrichtung (1) von außen auf der Dacheindeckung eines Gebäudedaches. Die ganze Haltevorrichtung (1) besteht komplett aus Edelstahl. In diesem Fall ist es Edelstahl V4A. Es ist aber auch ein anderer für die Witterungsbeständigkeit und Stabilitätsanforderungen geeigneter Edelstahl denkbar. Auch eine Kombination verschiedener Arten von Edelstahl ist möglich. Ferner sind auch andere geeigneten Materialien, die insbesondere ausreichend witterungsbeständig und stabil sind, wie beispielsweise vollverzinkter Stahl denkbar. Außerdem ist eine Variante der Haltevorrichtung (1) denkbar, bei der das Stativ (3) unten in mindestens zwei verschiedenen Stellungen bezüglich einer Drehung um seine eigene Längsachse an bzw. auf der Montagebasis (7) befestigbar ist, so dass sich im unteren Bereich des Stativs (3) die Ausnehmung (5) an verschiedenen Seiten relativ zur Montagebasis (7) je nach montierter Drehstellung des Stativs (3) befindet, wie beispielsweise, dass die Öffnung der Ausnehmung (5) bei vorgesehener Aufdachmontage in Richtung des Dachfirstes also nach oben oder entgegengesetzt in Richtung der Dachrinne also nach unten zeigt.

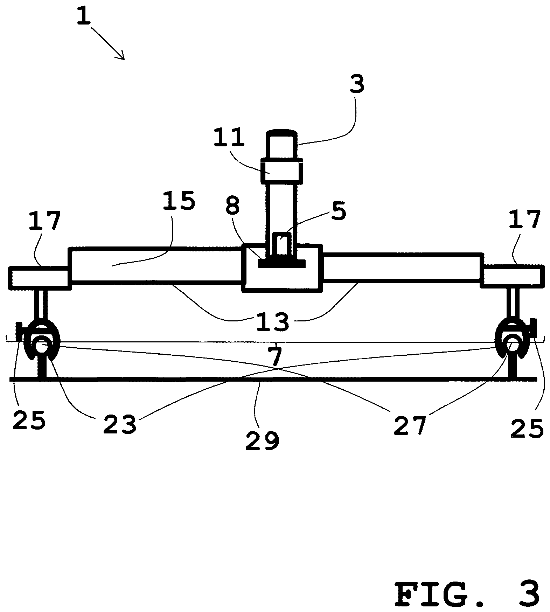

In Figur 3 ist ein weiteres Ausführungsbeispiel der erfindungsgemäßen Haltevorrichtung (1) in Vorderansicht gezeigt. Dieses Ausführungsbeispiel einer Haltevorrichtung (1) entspricht bis auf die Ausgestaltung der Elemente für einen Befestigung von außen auf der Dacheindeckung dem in Figur 1 und Figur 2 gezeigten. So enthält die Haltevorrichtung (1) ein durch ein Scharnier, also ein als Scharnier ausgeformtes Haltemittel (8), nach vorn und hinten stufenlos schwenkbares mit Hilfe einer Schelle, also eines als Schelle ausgeformtes weiteres Haltemittel (11), im Winkel festlegbares Stativ (3) samt einer Ausnehmung (5) für die Blitzschutzfangleitung. Ferner verfügt die Montagebasis (7) über teleskopartige Elemente (13) mit Rohr (15) zur Veränderung der Längsausdehnung der Montagebasis (7). Die beiden mindestens dreißig Zentimeter langen Abschlussstücke (17), wodurch die maximale Querausdehnung der Montagebasis (7) mindestens dreißig Zentimeter beträgt, verfügen an ihrer Unterseite im Bereich der vier äußeren Ecken der Montagebasis (7) über als Klemmen (23) ausgeformte Befestigungsmittel. Diese Klemmen (23) sind so ausgebildet, dass sie einen Stehfalz (27) eines Stehfalzdachs (29) als Dacheindeckung eines Gebäudedachs in seinem Querschnitt im oberen Bereich umgreifen können. Bei der Dachbefestigung der Haltevorrichtung (1) umgreifen also die Klemmen (23) den oberen Bereich des Stehfalzes (27) und werden jeweils mit Hilfe einer Schraube (25) so weit zusammengezogen, dass die Klemmen (23) am jeweiligen Stehfalz (27) festklemmen und damit die Montagebasis (7) und somit auch die Haltevorrichtung (1) von außen auf dem Stehfalzdach (29) als Dacheindeckung eines Gebäudedachs befestigt wird.

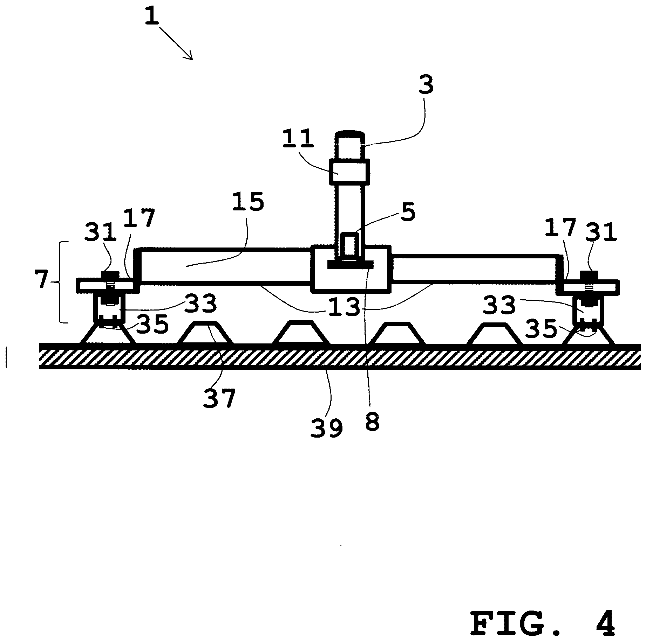

In Figur 4 ist ein weiteres Ausführungsbeispiel der erfindungsgemäßen Haltevorrichtung (1) in Vorderansicht gezeigt. Dieses Ausführungsbeispiel einer Haltevorrichtung (1) entspricht bis auf die Ausgestaltung der Elemente für einen Befestigung von außen auf der Dacheindeckung dem in Figur 1 und Figur 2 gezeigten. So enthält die Haltevorrichtung (1) ein durch ein Scharnier, also ein als Scharnier ausgeformtes Haltemittel (8), nach vorn und hinten stufenlos schwenkbares mit Hilfe einer Schelle, also eines als Schelle ausgeformtes weiteres Haltemittel (11), im Winkel festlegbares Stativ (3) samt einer Ausnehmung (5) für die Blitzschutzfangleitung. Ferner verfügt die Montagebasis (7) über teleskopartige Elemente (13) mit Rohr (15) zur Veränderung der Längsausdehnung der Montagebasis (7). Die beiden mindestens dreißig Zentimeter langen Abschlussstücke (17), wodurch die maximale Querausdehnung der Montagebasis (7) mindestens dreißig Zentimeter beträgt, verfügen an ihrer Unterseite im Bereich der vier äußeren Ecken der Montagebasis (7) über mit Schrauben (31) befestigte z-förmige Winkelstücke (33). Die Schrauben (31) sind beispielsweise in der Größe M8x25. Es sind auch andere geeignete bekannte Befestigungsarten denkbar. Die jeweiligen planen Unterseiten der Winkelstücke (33) sind Auflageflächen zum Aufliegen auf Auflagestellen der Oberseiten der Trapezform eines Trapezdachs (37), welches sich auf den Dachlatten (39) eines Gebäudedachs befindet. In diesem Fall sind die Auflageflächen der Unterseiten der Winkelstücke (33) mit Nieten (35) mit den Auflagestellen der Oberseite der Trapezform eines Trapezdachs (37) vernietet. Es sind aber auch andere bekannte geeignete Befestigungsarten, wie beispielsweise eine Verschraubung denkbar.

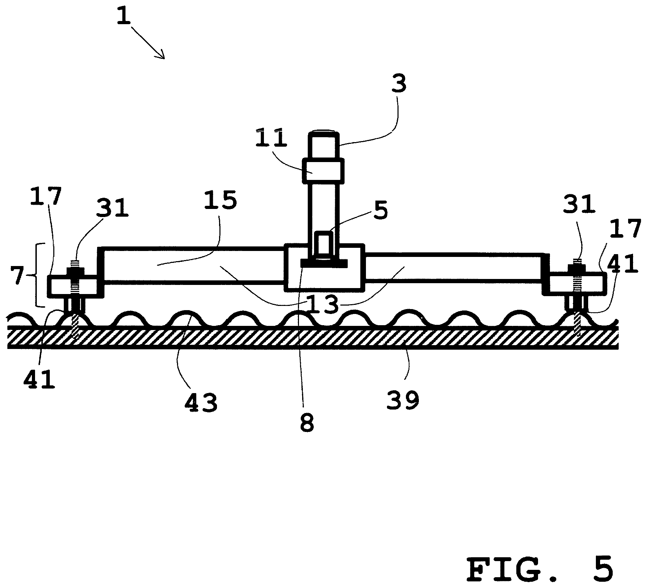

In Figur 5 ist ein weiteres Ausführungsbeispiel der erfindungsgemäßen Haltevorrichtung (1) in Vorderansicht gezeigt. Dieses Ausführungsbeispiel einer Haltevorrichtung (1) entspricht bis auf die Ausgestaltung der Elemente für einen Befestigung von außen auf der Dacheindeckung dem in Figur 1 und Figur 2 gezeigten. So enthält die Haltevorrichtung (1) ein durch ein Scharnier, also ein als Scharnier ausgeformtes Haltemittel (8), nach vorn und hinten stufenlos schwenkbares mit Hilfe einer Schelle, also eines als Schelle ausgeformtes weiteres Haltemittel (11), im Winkel festlegbares Stativ (3) samt einer Ausnehmung (5) für die Blitzschutzfangleitung. Ferner verfügt die Montagebasis (7) über teleskopartige Elemente (13) mit Rohr (15) zur Veränderung der Längsausdehnung der Montagebasis (7). Die beiden mindestens dreißig Zentimeter langen Abschlussstücke (17), wodurch die maximale Querausdehnung der Montagebasis (7) mindestens dreißig Zentimeter beträgt, verfügen im Bereich der vier äußeren Ecken der Montagebasis (7) über vertikale Löcher geeignet zum Durchführen von Schrauben (31) in Form von Stockschrauben als Befestigungsmittel zur Verschraubung der Haltevorrichtung (1) von außen auf ein oder mehreren Wellfaserzementplatten (43) als Dacheindeckung eines Gebäudedachs. Die Schrauben (31) in Form von Stockschauben sind jeweils oben mittels einer Mutter an den Abschlussstücken (17) der Montagebasis (7) festgeschraubt und mit ihrem unteren Gewinde durch die Wellfaserzementplatte (43) in die Dachlatten (39) geschraubt, und damit ist die Haltevorrichtung (1) fest von außen auf dem Gebäudedach montiert. Dichtringe (41) an den Stellen der Schraublöcher in der Wellfaserzementplatte (43) dichten die Dacheindeckung dort ab.

Die erfindungsgemäße Haltevorrichtung (1) ist gewerblich anwendbar, wie beispielsweise von einem Montageunternehmen für Blitzschutzfangeinrichtungen sowie von einem Unternehmen, das Haltevorrichtungen (1) für Blitzschutzfangeinrichtungen herstellt.

## Patentansprüche

1. Haltevorrichtung (1) mit einer Montagebasis (7) und einem darauf mit Haltemitteln (8, 9, 10, 11) gehaltenen rohr- oder stangenförmigen Stativ (3) für eine Blitzschutzfangeinrichtung, wobei die Montagebasis (7) Mittel zur Veränderung ihrer Längsausdehnung umfasst, und die Haltemittel (8, 9, 10, 11) derart ausgebildet sind, dass das rohr- oder stangenförmige Stativ (3) stufenlos über einen Winkelbereich in einer Winkelstellung von seiner Längsachse relativ zur Montagebasis (7) festlegbar ist, wobei
die Montagebasis (7) derart ausgebildet ist, dass sie von außen auf der Dacheindeckung eines Gebäudedachs mittels Befestigungsmittel befestigbar ist und im Bereich der vier äußeren Ecken jeweils äußere Positionen für Befestigungsmittel zur Befestigung der Haltevorrichtung (1) von außen auf der Dacheindeckung eines Gebäudedachs liegen, **dadurch gekennzeichnet,**
- **dass** die Montagebasis (7) in ihrer Querausdehnung senkrecht zu Längsausdehnung im Maximum mindestens dreißig Zentimeter aufweist,
- **dass** die Mittel zur Veränderung der Längsausdehnung der Montagebasis (7) zwei zueinander parallel liegende teleskopartige Elemente (13) umfassen, die jeweils zwei ineinandergreifende Rohre (15) enthalten oder jeweils ein Rohr (15) und eine in das Rohr (15) eingreifende Stange enthalten, und
- **dass** die Montagebasis (7) in der Ebene ihrer Quer- und Längsausdehnung vier mindestens dreißig Zentimeter voneinander entfernte äußere Ecken aufweist.

2. Haltevorrichtung (1) nach Anspruch 1 **dadurch gekennzeichnet, dass** die Montagebasis (7) an den beiden Endbereichen ihrer Längsausdehnung jeweils untere Auflageflächen (19) zur Befestigung der Haltevorrichtung (1) von außen auf der Dacheindeckung eines Gebäudedachs mittels Befestigungsmittel aufweist.

3. Haltevorrichtung (1) nach Anspruch 2 **dadurch gekennzeichnet, dass** die unteren Auflageflächen (19) jeweils derart ausgebildet sind, dass sie an die Form der Dacheindeckung an den jeweils vorgesehenen Auflagerstellen angepasst sind.

4. Haltevorrichtung (1) nach Anspruch 2 oder 3 **dadurch gekennzeichnet, dass** die unteren Auflageflächen (19) plan ausgebildet sind, wobei die jeweilige plane Auflagefläche (19) parallel zur von der Montagebasis (7) aufgespannten Ebene liegt und von Seiten des Stativs (3) gesehen die Montagebasis (7) nach unten hin begrenzen.

5. Haltevorrichtung (1) nach einem der Ansprüche 1 bis 4 **dadurch gekennzeichnet, dass** die Montagebasis (7) Löcher (21) für Befestigungsmittel, wie insbesondere Schrauben, zur Befestigung der Haltevorrichtung (1) von außen auf der Dacheindeckung eines Gebäudedachs aufweist.

6. Haltevorrichtung (1) nach Anspruch 5 **dadurch gekennzeichnet, dass** die Montagebasis (7) für Befestigungsmittel als Schrauben (31) in Form von Stockschrauben geeignet zur Verschraubung durch eine Wellfaserzementplatte (43) als Dacheindeckung eines Gebäudedachs ausgebildet ist.

7. Haltevorrichtung (1) nach einem der Ansprüche 1 bis 5 **dadurch gekennzeichnet, dass** sie in den Bereichen unter den beiden Querseiten der Montagebasis (7) befestigte Winkelstücke (33) aufweist, deren Unterseiten zum Aufliegen und Befestigen, wie insbesondere durch Vernietung, auf einem Trapezdach (37) als Dacheindeckung eines Gebäudedachs ausgeformt sind.

8. Haltevorrichtung (1) nach einem der Ansprüche 1 bis 4 **dadurch gekennzeichnet, dass** die Montagebasis (7) Befestigungsmittel ausgebildet als Klemmen (23) zum Festklemmen am Stehfalz (27) eines Stehfalzdaches (29) für die Befestigung auf einem Stehfalzdach (29) als Dacheindeckung eines Gebäudedachs aufweist.

9. Haltevorrichtung (1) nach einem der Ansprüche 1 bis 8 **dadurch gekennzeichnet, dass** sie aus Edelstahl besteht.

10. Haltevorrichtung (1) nach einem der Ansprüche 1 bis 9 **dadurch gekennzeichnet, dass** die festlegbare Winkelstellung der Längsachse des rohr- oder stangenförmigen Stativs (3) zur Montagebasis (7) im Bereich von zwanzig bis neunzig Grad stufenlos einstellbar ist.

11. Haltevorrichtung (1) nach einem der Ansprüche 1 bis 10 **dadurch gekennzeichnet, dass** die Winkelstellung mittels eines an seinem einen Ende vom Stativboden gesehen in Querausdehnung gegenüberliegenden Bereich der Montagebasis (7) schwenkbar gelagerten als Bügel ausgeformten Haltemittels (9) und eines, an dessen anderen Ende befestigten, den Stativquerschnitt umschießend fixierbaren als Schelle ausgeformten Haltemittels (11) ermöglicht wird.

## Claims

1. Holding device (1) having a mounting base (7) and, held thereon by holding means (8, 9, 10, 11) a tubular or rod-shaped stand (3) for a lightning protection device, wherein the mounting base (7) comprises means for changing its longitudinal extent, and the holding means (8, 9, 10, 11) are designed in such a way that the tubular or rod-shaped stand (3) is steplessly fixable over an angular range in an angular position of its longitudinal axis relative to the mounting base (7), wherein the mounting base (7) is designed in such a way that it can be fastened from outside on the roof covering of a building roof by means of fastening means and, in the region of the four outer corners, there are in each case situated outer positions for fastening means for fastening the holding device (1) from outside on the roof covering of a building roof, **characterized**
- **in that** the mounting base (7) has in its transverse extent perpendicular to the longitudinal extent a maximum of at least thirty centimetres,
- **in that** the means for changing the longitudinal extent of the mounting base (7) comprise two mutually parallel telescope-like elements (13) which each contain two inter-engaging tubes (15) or each contain a tube (15) and a rod engaging in the tube (15), and
- **in that** the mounting base (7) has, in the plane of its transverse and longitudinal extent, four outer corners at a distance of at least thirty centimetres from one another.

2. Holding device (1) according to Claim 1, **characterized in that** the mounting base (7) has, at the two end regions of its longitudinal extent, in each case lower support surfaces (19) for fastening the holding device (1) from outside on the roof covering of a building roof by means of fastening means.

3. Holding device (1) according to Claim 2, **characterized in that** the lower support surfaces (19) are each formed in such a way that they are adapted to the shape of the roof covering at the respectively provided support points.

4. Holding device (1) according to Claim 2 or 3, **characterized in that** the lower support surfaces (19) are of planar design, wherein the respective planar support surface (19) lies parallel to the plane defined by the mounting base (7) and, as seen from the stand (3), downwardly delimits the mounting base (7).

5. Holding device (1) according to one of Claims 1 to 4, **characterized in that** the mounting base (7) has holes (21) for fastening means, such as, in particular, screws, for fastening the holding device (1) from outside on the roof covering of a building roof.

6. Holding device (1) according to Claim 5, **characterized in that** the mounting base (7) is designed for fastening means as screws (31) in the form of dowel screws suitable for screwing through a corrugated fibre cement panel (43) as roof covering of a building roof.

7. Holding device (1) according to one of Claims 1 to 5, **characterized in that** it has angle pieces (33) which are fastened in the regions under the two transverse sides of the mounting base (7) and whose undersides are configured for supporting and fastening, such as, in particular, by riveting, on a trapezoidal roof (37) as roof covering of a building roof.

8. Holding device (1) according to one of Claims 1 to 4, **characterized in that** the mounting base (7) has fastening means designed as clamps (23) for clamping on the standing seam (27) of a standing seam roof (29) for the fastening on a standing seam roof (29) as roof covering of a building roof.

9. Holding device (1) according to one of Claims 1 to 8, **characterized in that** it consists of stainless steel.

10. Holding device (1) according to one of Claims 1 to 9, **characterized in that** the fixable angular position of the longitudinal axis of the tubular or rod-shaped stand (3) with respect to the mounting base (7) is steplessly adjustable in the range from twenty to ninety degrees.

11. Holding device (1) according to one of Claims 1 to 10, **characterized in that** the angular position is made possible by means of a holding means (9) in the form of a bracket which is pivotably mounted at its one end, as seen from the stand bottom, in the region of the mounting base (7) situated opposite in the transverse extent and by means of a fixable holding means (11) in the form of a clip which is fastened at its other end and encloses the stand cross section.

## Revendications

1. Dispositif de retenue (1) avec une base de montage (7) et un pied (3) en forme de tube ou de tige, retenu sur celle-ci par des moyens de retenue (8, 9, 10, 11), pour un appareil de capture de paratonnerre, la base de montage (7) comprenant des moyens pour modifier son extension longitudinale, et les moyens de retenue (8, 9, 10, 11) étant configurés de telle sorte que le pied en forme de tube ou de tige (3) peut être immobilisé de manière continue sur une plage angulaire dans une position angulaire de son axe longitudinal par rapport à la base de montage (7),
la base de montage (7) étant configurée de telle sorte qu'elle peut être fixée de l'extérieur sur la couverture de toit d'un toit de bâtiment au moyen de moyens de fixation et, dans la zone des quatre coins extérieurs, se trouvent respectivement des positions extérieures pour des moyens de fixation pour la fixation du dispositif de retenue (1) de l'extérieur sur la couverture de toit d'un toit de bâtiment, **caractérisé**
- **en ce que** la base de montage (7) présente dans son extension transversale perpendiculairement à l'extension longitudinale au maximum au moins trente centimètres,
- **en ce que** les moyens pour modifier l'extension longitudinale de la base de montage (7) comprennent deux éléments télescopiques (13) parallèles l'un à l'autre, qui contiennent chacun deux tubes (15) s'emboîtant l'un dans l'autre ou contiennent chacun un tube (15) et une tige s'emboîtant dans le tube (15), et
- **en ce que** la base de montage (7) présente, dans le plan de son extension transversale et longitudinale, quatre coins extérieurs éloignés les uns des autres d'au moins trente centimètres.

2. Dispositif de retenue (1) selon la revendication 1, **caractérisé en ce que** la base de montage (7) présente respectivement, aux deux zones d'extrémité de son extension longitudinale, des surfaces d'appui inférieures (19) pour la fixation du dispositif de retenue (1) de l'extérieur sur la couverture de toit d'un toit de bâtiment au moyen de moyens de fixation.

3. Dispositif de retenue (1) selon la revendication 2, **caractérisé en ce que** les surfaces d'appui inférieures (19) sont respectivement configurées de telle sorte qu'elles sont adaptées à la forme de la couverture de toit aux emplacements d'appui respectivement prévus.

4. Dispositif de retenue (1) selon la revendication 2 ou 3, **caractérisé en ce que** les surfaces d'appui inférieures (19) sont configurées sous forme plane, la surface d'appui plane respective (19) étant parallèle au plan défini par la base de montage (7) et délimitant la base de montage (7) vers le bas, vue depuis les côtés du pied (3).

5. Dispositif de retenue (1) selon l'une quelconque des revendications 1 à 4, **caractérisé en ce que** la base de montage (7) présente des trous (21) pour des moyens de fixation, tels que notamment des vis, pour la fixation du dispositif de retenue (1) de l'extérieur sur la couverture de toit d'un toit de bâtiment.

6. Dispositif de retenue (1) selon la revendication 5, **caractérisé en ce que** la base de montage (7) est configurée pour des moyens de fixation en tant que vis (31) sous forme de vis à double filetage appropriées pour le vissage à travers une plaque de fibrociment ondulée (43) en tant que couverture de toit d'un toit de bâtiment.

7. Dispositif de retenue (1) selon l'une quelconque des revendications 1 à 5, **caractérisé en ce qu'**il présente des pièces angulaires (33) fixées dans les zones sous les deux côtés transversaux de la base de montage (7), dont les côtés inférieurs sont formés pour reposer et être fixés, notamment par rivetage, sur un toit trapézoïdal (37) en tant que couverture de toit d'un toit de bâtiment.

8. Dispositif de retenue (1) selon l'une quelconque des revendications 1 à 4, **caractérisé en ce que** la base de montage (7) présente des moyens de fixation configurés sous forme de pinces (23) pour le serrage sur le joint debout (27) d'un toit à joint debout (29) pour la fixation sur un toit à joint debout (29) en tant que couverture de toit d'un toit de bâtiment.

9. Dispositif de retenue (1) selon l'une quelconque des revendications 1 à 8, **caractérisé en ce qu'**il est constitué d'acier inoxydable.

10. Dispositif de retenue (1) selon l'une quelconque des revendications 1 à 9, **caractérisé en ce que** la position angulaire immobilisable de l'axe longitudinal du pied (3) en forme de tube ou de tige par rapport à la base de montage (7) est réglable en continu dans la plage de vingt à quatre-vingt-dix degrés.

11. Dispositif de retenue (1) selon l'une quelconque des revendications 1 à 10, **caractérisé en ce que** la position angulaire est rendue possible au moyen d'un moyen de retenue (9) en forme d'étrier, monté en pivotement à l'une de ses extrémités, vu depuis le fond du pied, dans la zone de la base de montage (7) opposée à l'extension transversale, et d'un moyen de retenue (11) en forme de collier, fixé à son autre extrémité, pouvant être fixé en entourant la section transversale du pied.
